# EUROPEAN PATENT APPLICATION

(11) **EP 4 534 182 A1**
(43) Date of publication of application: **09.04.2025**
(21) Application number: 24196780.1
(22) Date of filing: 27.08.2024
(51) Int. Cl.: B01D 53/26, F17C 7/04, E01H 13/00, F28F 17/00, B01D 1/30

(54) **APPARATUS AND PROCESS FOR FOG MITIGATION**

(30) Priority: 30.08.2023 US 202318239826
(71) Applicant: Air Products and Chemicals, Inc., Allentown, PA 18106-5500 (US)
(72) Inventor: Rossetti, Marco E. F., Ashford, Middlesex, TW15 2RF (GB); Cohen, Joseph P., Bethlehem, PA, 18017 (US); Schmidt, Thomas S., Slatington, PA, 18080 (US); Wolf, Robert Gregory, Hackettstown, NJ, 07840 (US); Sane, Anup Vasant, Allentown, PA, 18104 (US)
(74) Representative: SSM Sandmair

(57) **Abstract**

An apparatus and process for fog mitigation can be include a mechanism to reduce fog formation and/or condense the fog into water to avoid fog being formed and moving through a site. Embodiments can be configured to utilize at least one fog collection mechanism positioned adjacent a vaporizer utilized to vaporizer a cryogenic liquid so that fog that may form adjacent the vaporizer is removed from air surrounding the vaporizer and prevented from spreading beyond the vaporizer to other areas of a site having the vaporizer (e.g. a hydrogen fueling station, etc.).

## Description

### FIELD OF THE INVENTION

The present innovation relates to processes and systems for mitigation of fog that can be formed as a result of processing a cryogenic liquid to vaporize the liquid.

### BACKGROUND OF THE INVENTION

Examples of hydrogen generation and/or supply systems can be appreciated from U.S. Patent Nos. 6,401,767, 6,474,078, 6,619,336, 6,708,573, 6,745,801, 6,786,245, 7,028,724, 7,328,726, 7,793,675, 7,921,883, 8,020,589, 8,286,675, 8,365,777, 8,453,682, 8,899,278, 9,074,730, 9,151,448, 9,261,238, 9,279,541, 9,404,620, 9,863,583, 10,502,649, 10,508,770, and 11,167,732. Examples of hydrogen storage and dispensing systems can also be appreciated from U.S. Patent Application Publication Nos. 2023/0137335 and 2023/0107342. Such systems can provide hydrogen to vehicles for use as a fuel that powers operation of the vehicle.

### SUMMARY

We determined that hydrogen storage and dispensing systems as well as other systems that utilize a cryogenic fluid for storage and dispensing the fluid as a fuel (e.g. natural gas based systems) or a process gas (e.g. liquid oxygen based systems that can heat oxygen to form an oxidant flow for combustion of a fuel, etc.) can result in operations that can often contribute to the formation of fog and/or the cold outer skin of an ambient vaporizer cooling nearby air to form a fog (e.g. condensation of water vapor within the air). Further, we found that if stored cryogenic liquid is utilized for fuel dispensing operations, ambient air vaporizers that can be utilized in such processing may also contribute to formation of undesired fog as well. We have found that such fog can be formed due to the cold shell of the vaporizers used to heat the cryogenic liquid to a vapor condensing water vapor in the air into water droplets, which can contribute to a significant fog around the vaporizer. In some cases, the fog can spread out to a relatively large area around the vaporizer (e.g. over 10 meters around the vaporizer, over 15 meters around the vaporizer, etc.).

We determined that the fog formation is undesirable. For example, the fog formation can reduce visibility and pose a possible safety issue. Moreover, we determined that the formation of the fog can create an undesirable appearance that can contribute to customer apprehension and fear about a fueling station or other site. Such factors can result in a customer not wanting to use a particular fueling station or choosing to stay away from a particular location.

Embodiments of our process, apparatus, and system can be provided that can help mitigate formation and/ or spreading of fog (e.g. avoid formation of fog or minimize the formation of fog and/ or minimize spreading of fog). Embodiments can also be adapted to minimize the overall footprint that may be associated with the fog mitigation or fog avoidance so that such a feature can be provided without requiring a substantial amount of additional space at a site. Embodiments can also be adapted to provide such functionality with low noise, low use of power, and/or a reusability of water generated from the fog formed adjacent a vaporizer that is undergoing fog mitigation via at least one fog mitigation device or a fog mitigation apparatus.

In a first aspect, an apparatus for fog mitigation is provided. Embodiments of the apparatus can include at least one fog collection device positionable adjacent to a vaporizer configured to vaporize a cryogenic liquid. The at least one fog collection device can be configured to collect fog formable adjacent the vaporizer to remove water from the fog for fog mitigation.

The fog mitigation can help avoid fog formation or avoid the spread of fog, for example. For mitigation can include, for instance, avoiding formation of fog, minimizing the formation of fog and/ or minimizing the spreading of fog.

In a second aspect, the at least one fog collection device can include a mesh body positionable adjacent the vaporizer and/or at least one fan positionable adjacent a lower portion of the vaporizer or below the vaporizer. A body of the at least one fan can be moveable to mitigate the fog. For example, the fan can include a disc having one or more apertures that can be rotated to break up the fog to help minimize its spread. As another example, the fan can include a body having rotatable blades that can help break up the fog or otherwise mitigate fog formation.

In a third aspect, the at least one fog collection device can include a housing having at least one sidewall extending from a bottom to define a chamber. An upper portion of the at least one sidewall can define a mouth through which a fog flow of the fog is passable to collect the fog within the chamber. In some embodiments, at least one support of the vaporizer can be positionable in the chamber in some embodiments. In other embodiments, one or more supports of the vaporizer may not be within the chamber.

Embodiments can also include one or more other fog collection devices. For example the apparatus can also include a fan positioned adjacent the chamber that is rotatable to help drive the fog flow of the fog into the chamber, a funnel positioned adjacent the chamber to guide the fog flow into the chamber, and/or a nozzle apparatus positioned to spray water to form a water curtain within the chamber. The nozzle apparatus can include a single nozzle or a plurality of nozzles. In some embodiments, for example, the apparatus can include all of these elements (e.g. the apparatus can include a fan positioned adjacent the chamber that is rotatable to help drive the fog flow of the fog into the chamber, a funnel positioned adjacent the chamber to guide the fog flow into the chamber, and a nozzle apparatus positioned to spray water to form a water curtain within the chamber.

In other embodiments, only one or only two of these additional units may be utilized. For instance, embodiments may include a fan positioned adjacent the chamber that is rotatable to help drive the fog flow of the fog into the chamber and/or a funnel positioned adjacent the chamber to guide the fog flow into the chamber.

In some embodiments, a water recirculation system can be connected to the housing so that water from within the chamber is passable to a nozzle apparatus positioned to spray water to form a water curtain within the chamber. The water recirculation system can include a pump that is in fluid communication with the chamber via a pump recirculation feed conduit connected between the pump and the chamber of the housing, for example.

In a fourth aspect, an air drying system can be positioned to remove water from air before the air is fed to the vaporizer as a heating medium for vaporizing the cryogenic liquid. In some embodiments, the air drying system can include a dryer positionable to remove water vapor from air to output a stream of dried air for feeding as a heating medium to a vaporizer configured to vaporize a cryogenic liquid. The at least one fog collection device can be configured to collect fog formable adjacent the vaporizer to remove water from the fog for fog mitigation. A refrigerant cooling device can be positioned to feed a stream of refrigerant at a pre-selected dryer feed temperature to the dryer so that one or more elements of the dryer are coolable to contact the air passed through the dryer and condense water vapor within that air to remove water vapor from the air to form the stream of dried air. A recirculation device can also be positioned to increase pressure of the refrigerant output from the dryer to a pre-selected refrigerant cooling device feed pressure for feeding to the refrigerant cooling device via a refrigerant cooling device feed conduit connected between the recirculation device and the refrigerant cooling device so that the refrigerant output from the dryer is passable to the refrigerant cooling device to undergo cooling to the pre-selected dryer feed temperature.

In some embodiments, the refrigerant can be or include D-limonene or hydrogen. Other embodiments may utilize another suitable type of refrigerant.

In a fifth aspect, the apparatus of the first aspect can include one or more features of the second aspect, third aspect and/or fourth aspect. Embodiments of the apparatus can also include other features. For instance, examples of such additional features can be appreciated from the exemplary embodiments discussed herein.

In a sixth aspect, an apparatus for fog mitigation can include a drying system having a dryer positionable to remove water vapor from air to output a stream of dried air for feeding as a heating medium to a vaporizer configured to vaporize a cryogenic liquid. The dried air can be utilized to help mitigate fog formation, for example.

In a seventh aspect, the drying system can include a refrigerant cooling device positioned to feed a stream of refrigerant at a pre-selected dryer feed temperature to the dryer so that one or more elements of the dryer are coolable to contact the air passed through the dryer and condense water vapor within that air to remove water vapor from the air to form the stream of dried air.

Embodiments can also include other features. For example, a recirculation device can be positioned to increase pressure of the refrigerant output from the dryer to a pre-selected refrigerant cooling device feed pressure for feeding to the refrigerant cooling device via a refrigerant cooling device feed conduit connected between the recirculation device and the refrigerant cooling device so that the refrigerant output from the dryer is passable to the refrigerant cooling device to undergo cooling to the pre-selected dryer feed temperature.

In an eighth aspect, a process for fog mitigation is provided. The process can include positioning at least one fog collection device adjacent to a vaporizer configured to vaporize a cryogenic liquid and collecting fog formed via operation of the vaporizer via the at least one fog collection device for fog mitigation.

Embodiments of the process can include other steps. For example, the process can also include collecting liquid water from the at least one fog collection device for use of the liquid water. As another example, the process can also (or alternatively) include drying air to form a stream of dried air for feeding to the vaporizer as a heating medium for vaporization of the cryogenic liquid and feeding a refrigerant to a dryer for the drying of the air to form the stream of dried air.

In a ninth aspect, embodiments of our apparatus for fog mitigation can be configured to implement an embodiment of our process for fog mitigation. For example, the process can utilize at least one fog collection device that can include a mesh body positionable adjacent the vaporizer and/or at least one fan positionable adjacent a lower portion of the vaporizer or below the vaporizer. A body of the at least one fan can be configured to rotate to mitigate the fog formation.

As another example, the process can utilize at least one fog collection device that includes a housing having at least one sidewall extending from a bottom to define a chamber wherein an upper portion of the at least one sidewall defines a mouth through which a fog flow of the fog is passable to collect the fog within the chamber. Some embodiments can be configured so that at least one support of the vaporizer is positionable in the chamber.

As yet another example, the process can utilize at least one fog collection device that includes a fan positioned adjacent the chamber that is rotatable to help drive the fog flow of the fog into the chamber, a funnel positioned adjacent the chamber to guide the fog flow into the chamber, and/or a nozzle apparatus positioned to spray water to form a water curtain within the chamber.

In a tenth aspect, the process of the eighth aspect can include one or more features of the ninth aspect and/or the tenth aspect. Embodiments can also, or alternatively, utilize other process steps or features. Examples of such additional features or process steps can be appreciated from the exemplary embodiments discussed herein.

It should be appreciated that embodiments of the process and apparatus can utilize various conduit arrangements and process control elements. The embodiments may utilize sensors (e.g., pressure sensors, temperature sensors, flow rate sensors, concentration sensors, etc.), controllers, valves, piping, and other process control elements. Some embodiments can utilize an automated process control system and/or a distributed control system (DCS), for example. Various different conduit arrangements and process control systems can be utilized to meet a particular set of design criteria. The DCS or automated process control system can utilize one or more computer devices that include a processor connected to a non-transitory computer readable medium and at least one transceiver that is configured to monitor, oversee and/or control processing in accordance with at least one pre-defined algorithm that can be defined in code stored in the computer readable medium that is executable by the processor.

Other details, objects, and advantages of our process for fog mitigation, apparatuses for fog mitigation, a hydrogen dispensing system, a cryogenic fluid dispensing system, and methods of making and using the same will become apparent as the following description of certain exemplary embodiments thereof proceeds.

### BRIEF DESCRIPTION OF THE DRAWINGS

Exemplary embodiments of our process for fog mitigation, apparatuses for fog mitigation, a hydrogen dispensing system, a cryogenic fluid dispensing system, and methods of making and using the same are shown in the drawings included herewith. It should be understood that like reference characters used in the drawings may identify like components.
Figure 1 is a block diagram of a first exemplary embodiment of a cryogenic fluid dispensing system having an exemplary embodiment of an apparatus for fog mitigation. Some optional elements of this exemplary embodiment are shown in broken line in Figure 1.
Figure 2 is a schematic diagram of an exemplary embodiment of the apparatus for fog mitigation that can be utilized in the first exemplary embodiment of the cryogenic fluid dispensing system and/or the second exemplary embodiment of a cryogenic fluid dispensing system shown in Figure 6.
Figure 3 is a schematic diagram of another exemplary embodiment of the apparatus for fog mitigation that can be utilized in the first exemplary embodiment of the cryogenic fluid dispensing system and/or the second exemplary embodiment of the cryogenic fluid dispensing system shown in Figure 6.
Figure 4 is a schematic diagram of another exemplary embodiment of the apparatus for fog mitigation that can be utilized in the first exemplary embodiment of the cryogenic fluid dispensing system and/or the second exemplary embodiment of the cryogenic fluid dispensing system shown in Figure 6.
Figure 5 is a top schematic view of an exemplary embodiment of a fog collection mechanism that can be utilized in an exemplary embodiment of the apparatus for fog mitigation.
Figure 6 is a block diagram of a second exemplary embodiment of a cryogenic fluid dispensing system having an exemplary embodiment of an apparatus for fog mitigation. Some optional elements of this exemplary embodiment are shown in broken line in Figure 6.
Figure 7 is a flow chart illustrating an exemplary embodiment of a process for fog mitigation.
Figure 8 is a schematic diagram of an exemplary embodiment of the apparatus for fog mitigation that can be utilized in the first exemplary embodiment of the cryogenic fluid dispensing system and/or the second exemplary embodiment of a cryogenic fluid dispensing system shown in Figure 6.

### DETAILED DESCRIPTION

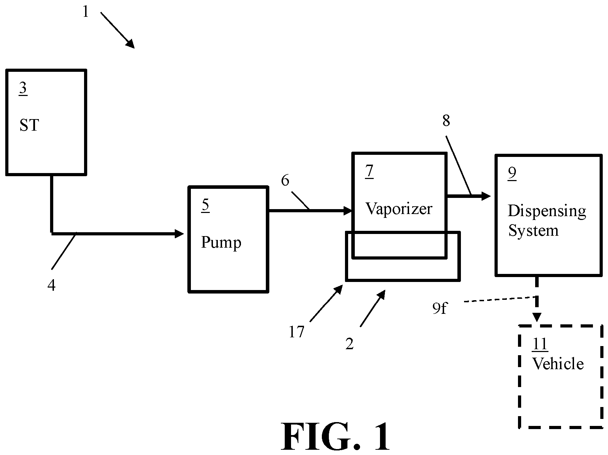

As may be appreciated from Figures 1-8 and the disclosure provided herein, exemplary embodiments of our apparatus for fog mitigation 2 can be utilized in embodiments of a cryogenic fluid dispensing system 1. Embodiments of the apparatus for fog mitigation 2 can include one or more fog collection devices. Embodiments of the apparatus for fog mitigation 2 can also (or alternatively) include at least one air drying system 50.

For example, a cryogenic fluid dispensing system 1 can include a storage tank 3 (ST) that can be in fluid communication with a pump 5 so that cryogenic liquid stored in the tank 3 can be fed to the pump 5 via at least one tank outlet conduit 4 connected between the tank 3 and the pump 5. The tank 3 can store cryogenic fluid at a pre-selected storage pressure, which can be a pressure in the range of 0.1 MPa to 1 MPa, 0.1 MPa to 3 MPa, or other suitable pressure range. The tank 3 can store cryogenic liquid as well as cryogenic gas that may boil off of the cryogenic liquid or otherwise form as the liquid may warm during storage. The cryogenic fluid stored in the tank can be comprised of hydrogen or other suitable cryogenic fluid (e.g. oxygen or liquid natural gas, etc.). In some embodiments, the cryogenic liquid can be liquid hydrogen and the cryogenic gas formed via vaporization of the liquid can be hydrogen gas, for example.

The pump 5 can output the cryogenic liquid at an elevated pre-selected vaporizer feed pressure for feeding to a vaporizer 7 via a vaporizer feed conduit 6 connected between the pump 5 and the vaporizer 7. The pre-selected vaporizer feed pressure can be a pressure within the range of 1 MPa to 35 MPa, greater than 0.1 MPa to 80 MPa, greater than 0.1 MPa to 70 MPa, or other suitable pressure for feeding cryogenic liquid to the vaporizer 7 for undergoing vaporization.

The vaporizer 7 can include at least one heat exchanger. For example, the vaporizer 7 can include at least one ambient air heat exchanger, a plurality of ambient air heat exchangers, a plurality of heat exchangers, at least one ambient air vaporizer, or other type of suitable vaporizer 7.

The vaporizer 7 can receive at least one heating medium to heat the cryogenic liquid for vaporizing the cryogenic liquid and outputting a cryogenic gas for feeding to a dispensing system 9 via a dispensing system feed conduit 8 connected between the vaporizer 7 and the dispensing system 9. The cooled heating medium that heated the cryogenic liquid can be output from the vaporizer for being vented or being fed to another process for further use (e.g. as a cooling medium, etc.).

In some embodiments, the heating medium fed to the vaporizer 7 for vaporizing the cryogenic liquid can be ambient air that is fed into the vaporizer via free convection, a fan or other heating medium flow device that can be positioned to feed air surrounding the vaporizer 7 into the vaporizer 7 to function as a heating medium for heating the cryogenic liquid to vaporize the cryogenic liquid and form the cryogenic gas to be output from the vaporizer 7. The cooled air can then be vented from the vaporizer 7 to atmosphere after it is used as a heating medium in the vaporizer 7.

In some embodiments, the dispensing system 9 can be arranged and configured to feed the cryogenic gas to at least one vehicle 11 via at least one vehicle connection mechanism 9f positioned between the dispensing system 9 and the vehicle 11. In such embodiments, the dispensing system 9 can include a flow control manifold connected to at least one dispenser and each dispenser can include a nozzle for connection to a vehicle fuel tank for feeding the cryogenic gas to the vehicle fuel tank. Each nozzle can be connected to a dispenser via a hose for feeding the cryogenic gas from the dispenser to the vehicle fuel tank, for example. In some embodiments, the dispensing system 9 can also include at least one buffer tank positioned between the vaporizer 7 and the dispenser of the dispensing system 9 to provide temporary storage of cryogenic gas for subsequently being fed to the dispenser.

In other embodiments, the dispensing system 9 can receive the cryogenic gas and be configured to output that gas for other downstream use via a downstream process unit (e.g. feeding oxygen gas as an oxidant to a furnace or combustor for combusting a fuel for melting metal or generating heat for another purpose, etc.). In such embodiments, the dispensing system 9 can be considered a cryogenic gas distribution system or an oxidant distribution system.

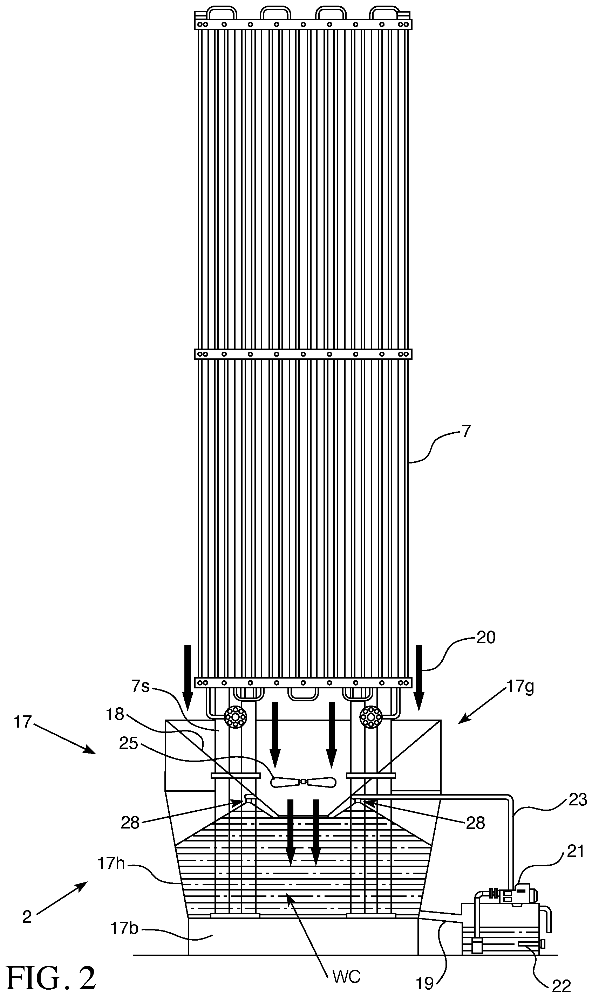

The cryogenic fluid dispensing system 1 can include an apparatus for fog mitigation 2. The fog mitigation apparatus 2 can include a fog collection device 17 that can include one or more fog collection mechanisms. Examples of a fog collection device 17 that can be utilized may best be appreciated from Figures 2-5.

The vaporizer in some embodiments can be configured so that the vaporizer 7 may be at a height of between 3 meters and 10 meters above the ground or other suitable height in some embodiments. The vaporizer 7 can be supported above the ground via one or more supports 7s in some embodiments and at least one fog collection device 17 can be positioned adjacent a bottom of the vaporizer 7 and/or adjacent a lower portion of the vaporizer 7 in some embodiments.

For example, a fog collection device 17 can include at least one fog collection mechanism that is configured to facilitate collection of fog that can be formed adjacent the vaporizer 7. The fog that is formed can be from condensation of water vapor within air adjacent the vaporizer's outer skin and/or formation of water in the cooled air output from the vaporizer 7 after being used as a heating medium for vaporization of the cryogenic liquid. The fog collection device 17 can be positioned adjacent a bottom of the vaporizer 7 to collect a fog flow 20 into a housing of the fog collection device 17. The housing 17g can include a bottom 17b that is positioned on a platform on the ground or on the ground and can include at least one sidewall 17h that extends from the bottom 17b to define an inner chamber for collection of fog and capture of liquid water from the fog. The housing sidewall(s) 17h can extend to define a chamber in which supports 7s that support the vaporizer 7 above the ground are positioned. The supports 7s can be located within the chamber of the housing 17g and have an upper portion that can be positioned above the upper portion of the sidewall(s) 17h.

The upper portion of the one or more sidewalls 17h can define a mouth for receiving a fog flow 20 into the chamber of the housing 17g. The upper portion of the one or more sidewalls 17h can define the mouth so that the mouth is adjacent a bottom of the vaporizer 7 and below an upper portion or at an upper portion of the one or more supports 7s that can support the vaporizer 7 above the ground. The sidewalls 17h of the housing can help hide any fog formed via operation of the vaporizer from view external to the chamber of the housing 17g. The housing 17g can also help reduce or limit any noise that may be produced via use of a fan 25 and/or nozzle apparatus 28 in some embodiments.

The fog collection device 17 can include a fan 25 that can be positioned in the chamber of the housing 17g adjacent the vaporizer or below the vaporizer 7 so that rotation of the fan 25 (e.g. via rotation of blades of the fan 25 or rotation of a body 31 of the fan 25) can drive the fog flow 20 into the chamber of the housing 17g. The rotation of the fan 25 can be provided so that it occurs with a relatively low noise. Utilization of the fan 25 near or within the housing 17g can also help limit the noise from use of the fan 25.

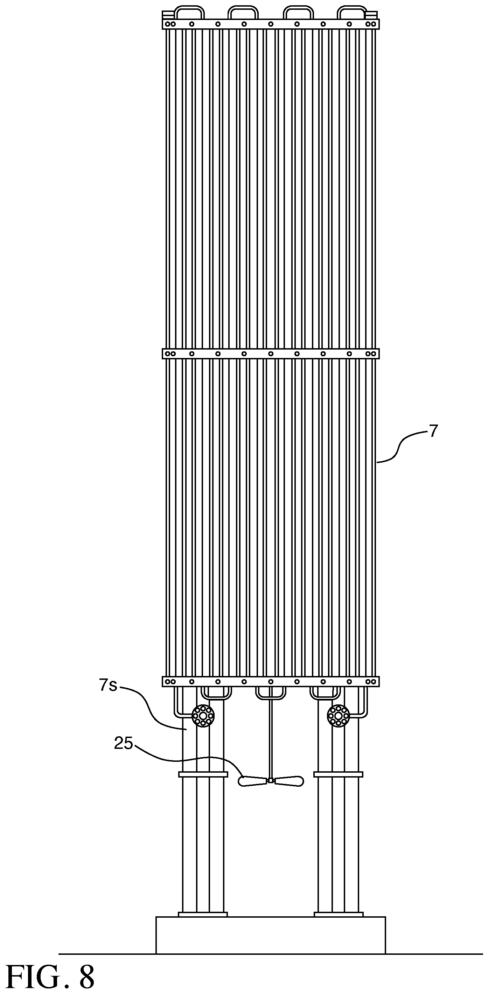

In some embodiments (e.g. the exemplary embodiment shown in Figure 8), the fan 25 can be utilized as the fog collection device 17 without use of any housing 17g or pump or water sprayer or other fog mitigation features. For example, the fan 25 can be positioned adjacent a lower portion of the vaporizer 7 and/or near supports of the vaporizer 7. The fan 25 can be rotated to pull fog that may form near the vaporizer toward the fan for collection of the fog so that the fog can be dispersed or mitigated via rotation of the fan and/or contact of the blades of the fan or the body of the fan with the water droplets suspended within the fog.

In other arrangements, the fan 25 can be configured to rotate to break up the fog (e.g. remove water droplets from the surrounding air to mitigate the fog). For example, the body of the fan 25 can include a rotatable disc, or spinning disc, which is not necessarily drawing any air but still functions to contact the water droplets of the fog to break up the fog for fog mitigation. Other embodiments of the fan can include a body that includes a rotatable disc having apertures therein or can include a body having elongated blades that extend from a hub.

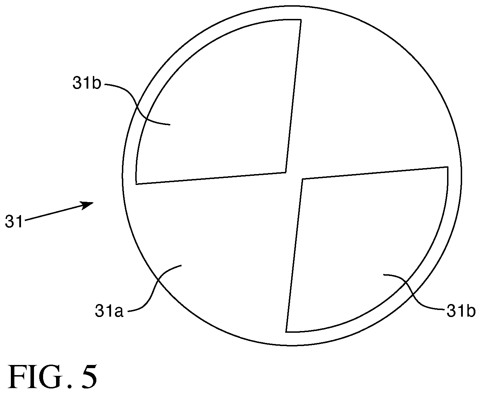

An example of one type of fan 25 that can be utilized is shown in Figure 5. The body 31 of the fan 25 can be defined to include one or more apertures 31b through which fog and/or air around a vaporizer 7 can be passed through as the body 31 of the fan 25 is rotated. The body 31 can include at least one portion 31a that is positioned between the apertures 31b to facilitate the shaping of the apertures to a desired size and/or geometry. In some configurations, each aperture 31b can be located within an outer perimeter of the body 31 such that each aperture 31b is surrounded by at least one portion 31a of the body to define the shape of the aperture 31b and position the aperture 31b entirely within the body 31 of the fan 25. The one or more apertures 31b can be positioned and shaped so that rotation of the body 31 drives motion of fog in the fog flow 20 and drives the fog and other nearby air to pass through the one or more apertures 31b and contact the body 31 for knocking the water of the fog out of the air for collection of liquid water below the fan 25 within the chamber of the housing 17g so that water within the fog can be removed to mitigate formation of fog or eliminate the fog being formed by operation of the vaporizer 7.

The body 31 of the fan 25 can be coated. The coating positioned on the body 31 can be configured to facilitate contacting the water droplets of the fog to cause the liquid water within the fog to be driven out of the air toward a bottom 17b of the housing 17g or toward the ground below the fan 25. In some configurations, the coating can be a hydrophobic coating, for example.

The body 31 of the fan 25 shown in Figure 5 is illustrated as being disc-like in shape. However, the body 31 of the fan 25 can alternatively include other geometries and shapes as well. In alternative embodiments, the fan 25 can also include a rotatable body that can include or have a plurality of blades that can extend from the body and be rotatable. Also, the embodiment of the fan 25 shown in Figure 5 has multiple apertures 31b that include a first aperture and a second aperture. It is contemplated that embodiments may utilize only a single aperture or can utilize more than two apertures (e.g. include a third aperture and/or further apertures).

The fog collection device 17 can also, or alternatively, include a funnel 18 that can be positioned in the chamber. The funnel 18 can be attached to one or more of the sidewalls 17h for being positioned in the chamber to help guide the fog flow 20 toward the bottom 17b of the housing 17g, for example. The fog flow can be guided via the funnel 18 and/or fan 25 so the fog is contacted by a water collection mechanism WC. The water collection mechanism WC can include a nozzle apparatus 28 that can include one or more liquid water injectors (e.g. one or more liquid water spray nozzles or liquid water sprayers) that can inject a spray of liquid water onto fog in the chamber to form a water curtain for collecting the water droplets of the fog. Liquid water from the fog can be removed from the air of the fog and can be collected within the chamber. In some embodiments, the nozzle apparatus 28 can include a single injector, such as a liquid water injector that is positioned in a central or middle region of the chamber to distribute a spray of water to form a water curtain for contacting the fog to collect water within the fog within the chamber.

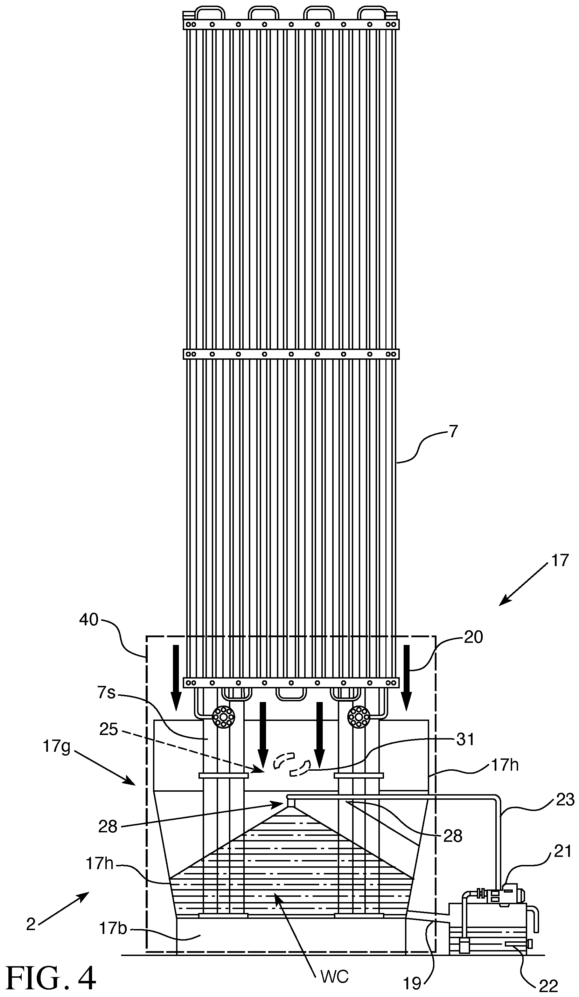

Figure 4 illustrates an example of such a nozzle apparatus 28. In other embodiments, the nozzle apparatus 28 can include a plurality of spray nozzles attached to a nozzle ring that is positioned within the chamber of the housing 17g. The plurality of such nozzles can be positioned adjacent an inner side of the sidewall(s) 17h for forming the water curtain of sprayed water output from the spray nozzles so the water can be collected from the fog for subsequent use. The formed water curtain can be a continuous spray of water that is output from the one or more injectors of the nozzle apparatus 28 so falling water is sprayed downwardly toward the bottom 17b of the housing within the chamber in a curtain from the injectors to a lower location adjacent a bottom 17b of the housing 17g or to a lower portion of the chamber of the housing 17g used to collect the fog for fog mitigation. This type of collection of fog and collection of liquid water from the air of the collected fog can mitigate formation of fog and avoid fog being formed adjacent the vaporizer. This type of collection of fog can also avoid fog from migrating from the vaporizer 7 to other regions significantly beyond the vaporizer to create an undesired aesthetic effect and prevent a loss of vision by others to avoid safety risks associated with low visibility (e.g. a driver of a vehicle being unable to see pedestrians, personnel being unable to view the adjacent equipment and appreciate the status of that equipment and/or whether any type of dangerous situation may exist due to the unauthorized presence of a pedestrian near that structure, etc.). The housing 17g and its position can also help hide fog that may be formed so that nearby personnel or customers may not see the fog or view any significant amount of fog that may be formed during operation of the vaporizer 7.

The fog collection device 17 can also include a water recirculation system. The recirculation system can include a pump 21 that can be in fluid communication with the chamber of the housing 17g so that liquid water collected adjacent to the lower portion or bottom 17b of the housing 17g can be fed to the pump 21 via a pump recirculation feed conduit 19 connected between the pump 21 and the chamber of the housing 17g. The pump 21 can be positioned and configured to feed liquid water to the nozzle apparatus 28 for being output in at least one spray to form the water curtain via a pump outlet conduit 23 connected between the pump 21 and the nozzle apparatus 28.

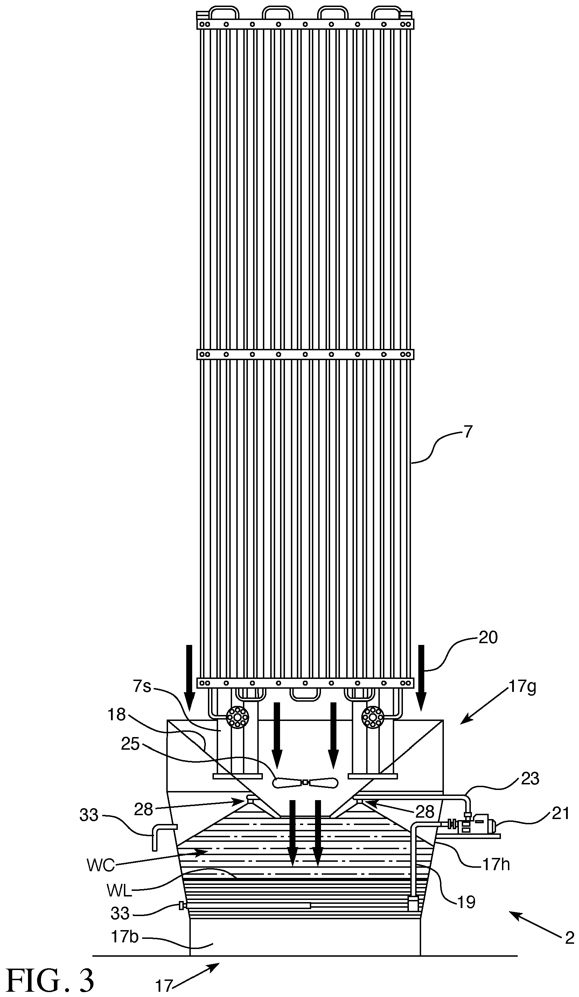

In some configurations, the pump 21 can be connected to the housing 17g and/or supported on the housing 17g. In such a configuration, the pump 21 can function like a sump pump and feed water collected at the bottom of the chamber to the nozzle apparatus. The embodiment of Figure 3 illustrates such an arrangement for the recirculation system having such a pump 21 arrangement. In such a configuration, the inlet for the pump recirculation feed conduit 19 can be positioned within the chamber of the housing 17g so that the inlet for this conduit is located below a pre-selected liquid water line WL for collected liquid water within the housing 17g.

In other embodiments, the recirculation system can be positioned and configured so that the pump 21 is positioned adjacent the housing 17g. The pump 21 can be connected to a water reservoir 22 that is positioned between the chamber of the housing 17g and the pump 21 so that water received from the housing 17g via the pump recirculation feed conduit 19 is passed through the pump recirculation feed conduit 19 to the reservoir 22 via gravity and/or operation of the pump 21. The pump 21 can be connected to the reservoir 22 so that the water stored in the reservoir 22 is fed to the pump 21 when the pump 21 is activated to drive a flow of water from the pump 21 to the nozzle apparatus 28 via the pump outlet conduit 23. The embodiments of Figures 2 and 4 illustrate examples of an arrangement of such a pump 21 and recirculation system.

In other embodiments, the pump 21 and/or recirculation system may not be utilized. Instead, a bottom 17b of the housing 17g can include at least one grate, at least one drain, or other type of aperture arrangement to facilitate the flow of liquid water extracted from the fog to a drainage system.

Some embodiments of the housing 17g can utilize one or more liquid water outlet conduits 33 for the outputting of water from a water collection mechanism of the fog collection device 17. For example, a lower liquid water outlet conduit 33 can be connected to the housing 17g and be in communication with the chamber of the housing 17g for drainage of liquid water out of the chamber for being distributed to another process element of a system. As another example, an upper liquid water outlet conduit 33 can be connected to the housing 17g and in communication with the chamber of the housing 17g for drainage of liquid water out of the chamber for being distributed to another process element of a system. The upper outlet conduit 33 can have an inlet that can be positioned for collecting liquid water that may be retained in the chamber to prevent an overflow condition in which a liquid water line WL of the water collected in the housing's chamber rises beyond a pre-selected height within the housing 17g. The collected liquid water can be relatively pure and can be utilizable in a number of process units that may utilize water, for example. Additional conduits can be connected between the fog collection device liquid water outlet conduit(s) 33 and the process unit for conveying the liquid water to that process unit. In some contemplated embodiments, the liquid water can be collected and stored in a tank for subsequent use as water for cleaning operations, landscaping operations (e.g. watering grass or other plants on a site of the facility having the fog collection device 17, etc.) and/or feeding to another plant process element that may utilize liquid water (e.g. as a refrigerant or a heating medium in a heat exchanger application, etc.) so that use of other water from other sources can be avoided or limited.

The fog collection device 17 can also include at least one body of mesh that is shaped and configured to contact liquid water droplets of fog that can pass through holes of the mesh body so that the liquid water is removed from the air of the fog and passes along the mesh body 40 downwardly for collection within a housing 17g or for being passed to a drain or on a ground below the vaporizer 7. Embodiments that may utilize such a mesh body fog collection mechanism may best be appreciated from Figures 1, 4 and 6.

The mesh body 40 having holes that are shaped and configured for collection of water droplets of the fog to mitigate formation of fog by removing the liquid water droplets from the air of the fog can be a water collection mechanism of the fog collection device 17 and/or be considered a fog collection mechanism as fog collected via the mesh body being positioned adjacent a vaporizer 7 can collect fog and remove liquid water from the fog to mitigate fog formation and/or avoid the formed fog from passing outside of the mesh body.

In some embodiments that utilize the mesh body 40, the housing 17g, fan 25, nozzle apparatus 28, and/or funnel 18 may also not be utilized. For instance, in some embodiments, the fog collection device 17 can be the mesh body 40 without use of the fan 25, housing 17g, nozzle apparatus 28, and funnel 18. For example, the mesh body 40 can be positioned around a fence that surrounds the vaporizer 7 or can be positioned near a fence line for such fencing. Such positioning of a mesh body 40 can be a positioning that is adjacent to the vaporizer 7. Adjacent positioning can also include positioning that permits the mesh body to collect and remove fog that forms near the vaporizer 7 (e.g. within a fence line of fencing that can surround the vaporizer or the vaporizer and other equipment, etc.). No pump 21 or recirculation system may be utilized in such an embodiment as well.

In other embodiments, the mesh body 40 can be utilized in conjunction with one or more other fog collection mechanisms. For instance, the mesh body 40 can be positioned adjacent the vaporizer and be utilized in conjunction with a fan 25. As another example, the mesh body 40 can be positioned adjacent the vaporizer and utilized in conjunction with the fan 25, funnel 18, housing 17g and nozzle apparatus 28. As yet another example, the mesh body 40 can be positioned adjacent the vaporizer and utilized in conjunction with a combination of the funnel 18, housing 17g and nozzle apparatus 28. A recirculation system having a pump 21 may also be utilized in such embodiments.

In some configurations, the mesh body 40 can have a surface area that is between 50% and 70% openings and between 50% and 30% structure that defines those openings. For example, an open area of the mesh body can be between 60% and 70% of the surface area of the body in some embodiments. The material of the mesh body can be configured to have a relatively low surface tension in some embodiments. Other embodiments may utilize other opening surface area configurations and/or can utilize higher surface tension surfaces as well. Some embodiments can utilize a mesh body that has a hydrophobic face and a hydrophilic face opposite the hydrophobic face. Other embodiments may utilize yet other types of mesh body configurations. The mesh material of the mesh body can be comprised of polyester, a polymeric material, a raschel mesh material, a tricot mesh material, a coated material, metal filaments, coated metal filament material, or other type of suitable material.

The mesh body 40 shaped fog collection mechanism can be a standalone fog collection device 17 that is passively present and attached to a portion of the vaporizer 7 or a support 7s to suspend the mesh body around a portion of the vaporizer for collection of fog and removal of liquid water suspended within the air of the fog for fog mitigation. The mesh body 40 can also be utilized in conjunction with the housing 17g by being positionable within the housing 17g or being positioned between the housing 17g and the vaporizer 7 for collection of fog and facilitating a fog flow 20 toward the chamber of the housing 17g along with facilitating the passing of liquid water removed from the fog via the mesh body into the chamber of housing 17g. In such embodiments, the mesh body 40 can be attached to the housing 17g and/or vaporizer 7 for being positioned in a desired location adjacent the housing 17g and/or within the chamber of the housing 17g. In some configurations, one or more supports can be positioned to facilitate support of the mesh body 40 in a desired location.

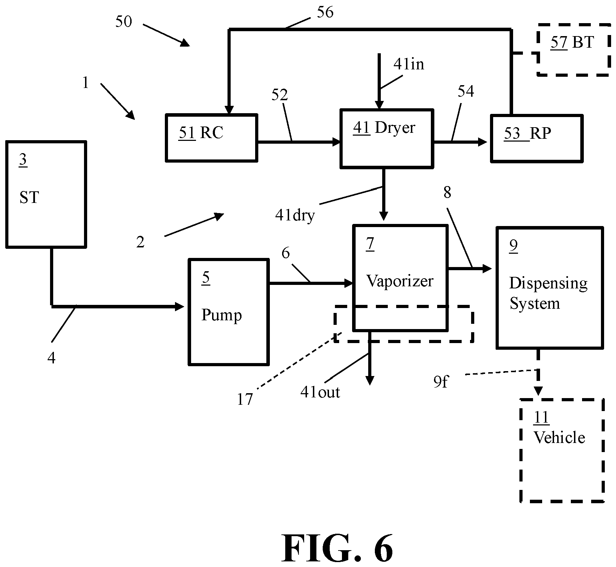

Embodiments of our apparatus for fog mitigation 2 can also include at least one air drying system 50. The drying system 50 can be configured to facilitate drying of air to help minimize fog formation that may occur from the ambient air being output from the vaporizer 7 after being utilized for heating the cryogenic liquid. The drying system 50 can be utilized alone as an apparatus for fog mitigation 2 or can be utilized in conjunction with at least one fog collection device 17 as the apparatus for fog mitigation 2 as may best be appreciated from Figure 6.

For example, for a vaporizer 7 configured for use of ambient air as the heating medium for vaporization of the cryogenic liquid, a drying system 50 can be utilized to pre-treat the air being fed to the vaporizer as the heating medium to dry the air, or dehumidify the air, to remove water vapor from that air. Such water vapor removal (or dehumidification) can help reduce the water content within the air and mitigate formation of fog that may occur as the cooled air is output from the vaporizer by reducing water content in the air that can be available for condensation to form a fog as a result of the cooler output temperature of the output cooled air.

For instance, the air drying system 50 can include a dryer 41 that is positioned to receive a feed of ambient air 41in to dry that air by removing water vapor from the air and output a stream of dried air 41 dry having less water vapor in the air as compared to the feed of ambient air 41in that was received by the dryer 41. The dryer 41 can be connected to the vaporizer 7 so that the stream of dried air 41dry output from the dryer is feedable to the vaporizer 7 as a heating medium for vaporization of the cryogenic liquid. The drying process, or dehumidification process, provided by the dryer 41 can also, in some embodiments, result in changing the temperature of the air. In some configurations, the dryer 41 can be operated so that the removal of water from the air can also heat the air, which can also help facilitate vaporization of the cryogenic liquid in the vaporizer 7.

The dryer 41 can also receive a stream of refrigerant 52 via a refrigerant feed conduit connected between the dryer 41 and a refrigerant cooling device 51 (RC). The refrigerant cooling device 51 can be configured to cool a refrigerant to a pre-selected dryer feed temperature for feeding to the dryer so that elements of the dryer can be cooled to contact the ambient air passed through the dryer and condense water vapor within that air to remove water vapor from the air. In some configurations, the elements can be moveable or adjustable so that as some elements are cooled for contact with ambient air others can undergo defrosting to help improve efficiency and performance of the dryer 41.

The warmed refrigerant used for cooling the elements of the dryer 41 can be output from the dryer 41 for feeding to a recirculation device 53 via a water condensing medium output conduit 54 connected between the recirculation device 53 (RP) and the dryer 41. In some embodiments, the recirculation device 53 can be a pump in situations where the refrigerant is a liquid or can be a compressor in situations where the refrigerant may be a vapor. The recirculation device 53 can increase the pressure of the refrigerant to a pre-selected refrigerant cooling device feed pressure for feeding to the refrigerant cooling device 51 (RC) via a refrigerant cooling device feed conduit 56 connected between the recirculation device 53 and the refrigerant cooling device 51 so that the refrigerant can undergo cooling to the pre-selected dryer feed temperature for being fed to the dryer 41. The pre-selected dryer feed temperature can be a temperature between -80°C and -100°C, less than -40°C and greater than -253°C, or other suitable temperature. In some embodiments, the refrigerant cooling device 51 can be configured as a heat exchanger or a chiller. The refrigerant utilized in the refrigerant cycle for feeding to the dryer 41 can be any suitable refrigerant, such as, for example, D-limonene, dipentene, liquid nitrogen, helium, liquid hydrogen, cryogenic fluid, or other suitable refrigerant. A buffer tank 57 (BT) that can retain additional refrigerant can be connected to the refrigerant cooling device feed conduit 56 to provide makeup refrigerant as may be needed during operation of the dryer 41 as well to account for losses of refrigerant that may occur during operation.

The cooling provided for cooling the warmed refrigerant to the pre-selected dryer feed temperature for being fed to the dryer 41 can be provided via the cold of the cryogenic liquid that was stored in the storage tank 3. The utilization of the cold of the stored cryogenic fluid can permit a more efficient utilization of the energy utilized for cooling the cryogenic liquid so that the energy invested into having the cryogenic liquid at a cold temperature is not lost or loss of such energy is minimized.

In other configurations, the dryer 41 can be operated without a refrigeration loop. Instead of a refrigerant, a portion of cryogenic fluid or cold fluid (e.g. liquid hydrogen passed through a dryer prior to being fed to the vaporizer 7 for vaporization) can be fed to the dryer to function as the refrigerant and be pre-heated prior to being fed to the vaporizer 7 for vaporization.

The dehumidified air (or dried air) passed to the vaporizer 7 as stream of dried air 41dry can be used as a heating medium therein and subsequently output from the vaporizer as a cooled heating medium flow 41out. The cooled air output from the vaporizer 7 can have a lower water content to help reduce fog formation or eliminate the formation of fog that may occur. Further, the output air can be passed through a fog collection device 17 to collect fog that may be formed via operation of the vaporizer 7 and remove liquid water from the fog for fog mitigation to avoid any fog that may form being present sufficiently to pose a visibility hinderance, a perceived safety issue, or an actual safety issue. As discussed above, such fog mitigation can be provided by utilization of at least one fog collection device 17, which can include, for example, utilization of a fan 25, a funnel 18, housing 17g, recirculation system having pump 21, mesh body 40, and/or nozzle apparatus 28 that can be positioned to provide a water curtain.

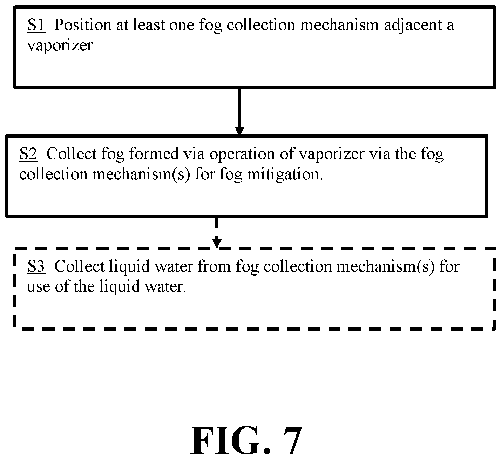

Embodiments of our apparatus for fog mitigation 2 can be utilized in conjunction with embodiments of a cryogenic fluid dispensing system and/or a cryogenic fluid distribution system. Embodiments of our apparatus for fog mitigation 2 can be designed and configured to implement an embodiment of our process for fog mitigation. An example of such a process can be appreciated from Figures 1-6 as well as the exemplary embodiment of our process shown in Figure 7. In a first step S1, at least one fog collection device can be positioned adjacent a vaporizer that can be positioned and configured to vaporize a cryogenic liquid. The fog collection device can include one or more fog collection mechanisms. In a second step S2, fog that may form during operation of the vaporizer 7 can be collected via at least one fog collection device 17 and/or at least one fog collection mechanism of that device.

Some embodiments can utilize other steps. For example, in a third step S3, the process can also include collecting liquid water from at least one fog collection mechanism for use of that liquid water. For instance, water that is collected via a chamber of a housing 17g can be recirculated for use in a nozzle apparatus 28 for formation of a water curtain and/or can be fed to other elements for use of the collected water. Alternatively, the water removed from the fog can be drained or otherwise directed below the vaporizer 7 to avoid formation of fog or minimize the amount of fog that may be formed near the vaporizer during its operation.

Embodiments of the process can also include other steps. For example, air to be fed to the vaporizer as a heating medium can be dried before it is fed to the vaporizer via at least one drying system 50 as discussed above, for instance. As another example, cryogenic fluid that is vaporized via the vaporizer 7 can be output from the vaporizer for downstream use (e.g. filling a vehicle fuel tank, feeding to a furnace or other process unit as discussed above, etc.).

Embodiments of our process, apparatus, and system can be provided that can help mitigate formation of fog (e.g. avoid formation of fog or minimize the formation of fog). Embodiments can be configured to minimize the overall footprint that may be associated with the fog mitigation or fog avoidance. As can be appreciated from the above, embodiments can also be adapted to provide such functionality with low noise, low use of power, and/or a reusability of water generated from the fog formed adjacent a vaporizer 7 that is undergoing fog mitigation via at least one fog collection device 17 or an apparatus for fog mitigation 2.

It should be appreciated that additional modifications or other modifications to the embodiments explicitly shown and discussed herein can be made to meet a particular set of design objectives or a particular set of design criteria. For instance, the arrangement of valves, piping, and other conduit elements (e.g., conduit connection mechanisms, tubing, seals, valves, etc.) for interconnecting different units for fluid communication of the flows of fluid between different elements (e.g., pumps, heat exchangers, compressors, storage vessels, etc.) can be arranged to meet a particular plant layout design that accounts for available area of the plant or facility having the apparatus for fog mitigation, sized equipment of the plant or facility, and other design considerations. As another example, the flow rate, pressure, and temperature of the fluid passed through the various apparatus or system elements can vary to account for different design configurations and other design criteria.

Embodiments of our process, apparatus, and system can each be configured to include process control elements positioned and configured to monitor and control operations (e.g., temperature and pressure sensors, flow sensors, an automated process control system having at least one work station that includes a processor, non-transitory memory and at least one transceiver for communications with the sensor elements, valves, and controllers for providing a user interface for an automated process control system that may be run at the work station and/or another computer device of the plant, etc.). It should be appreciated that embodiments can utilize a distributed control system (DCS) for implementation of one or more processes and/or controlling operations of an apparatus as well.

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of our process, apparatus, system, and methods of making and using the same have been shown and described above, it is to be distinctly understood that the invention is not limited thereto but may be otherwise variously embodied and practiced within the scope of the following claims.

## Claims

1. An apparatus for fog mitigation, the apparatus comprising:
at least one fog collection device (17) positionable adjacent to a vaporizer (7) configured to vaporize a cryogenic liquid, the at least one fog collection device (17) configured to collect fog formable adjacent the vaporizer (7) to remove water from the fog for fog mitigation.

2. The apparatus of claim 1, wherein the at least one fog collection device (17) comprises:
a mesh body (40) positionable adjacent the vaporizer (7); and/or
at least one fan (25) positionable adjacent a lower portion of the vaporizer (7) or below the vaporizer, a body (31) of the at least one fan (25) moveable to mitigate the fog.

3. The apparatus of claim 1 or claim 2, wherein the at least one fog collection device (17) comprises:
a housing (17g) having at least one sidewall (17h) extending from a bottom (17b) to define a chamber, at least one support (7s) of the vaporizer (7) being positionable in the chamber, an upper portion of the at least one sidewall (17h) defining a mouth through which a fog flow of the fog is passable to collect the fog within the chamber.

4. The apparatus of claim 3, comprising:
a fan (25) positioned adjacent the chamber that is rotatable to help drive the fog flow of the fog into the chamber;
a funnel (18) positioned adjacent the chamber to guide the fog flow into the chamber; and/or
a nozzle apparatus (28) positioned to spray water to form a water curtain within the chamber.

5. The apparatus of claim 3 or claim 4, comprising:
a water recirculation system connected to the housing (17g) so that water from within the chamber is passable to a nozzle apparatus (28) positioned to spray water to form a water curtain within the chamber.

6. The apparatus of claim 5, wherein the water recirculation system comprises a pump (21) that is in fluid communication with the chamber via a pump recirculation feed conduit (19) connected between the pump (21) and the chamber of the housing (17g).

7. The apparatus of any one of the preceding claims, comprising:
an air drying system (50) positioned to remove water from air before the air is fed to the vaporizer (7) as a heating medium for vaporizing the cryogenic liquid.

8. The apparatus of claim 7, wherein the air drying system (50) comprises:
a dryer (41) positionable to remove water vapor from air to output a stream of dried air (41dry) for feeding as a heating medium to the vaporizer (7), the at least one fog collection device (17) configured to collect fog formable adjacent the vaporizer (7) to remove water from the fog for fog mitigation;
a refrigerant cooling device (51) positioned to feed a stream of refrigerant at a pre-selected dryer feed temperature to the dryer (41) so that one or more elements of the dryer are coolable to contact the air passed through the dryer and condense water vapor within that air to remove water vapor from the air to form the stream of dried air (41dry); and
a recirculation device (53) positioned to increase pressure of the refrigerant output from the dryer (41) to a pre-selected refrigerant cooling device feed pressure for feeding to the refrigerant cooling device (51) via a refrigerant cooling device feed conduit (56) connected between the recirculation device and the refrigerant cooling device so that the refrigerant output from the dryer is passable to the refrigerant cooling device to undergo cooling to the pre-selected dryer feed temperature.

9. An apparatus for fog mitigation, the apparatus comprising:
a drying system (50) having a dryer (41) positionable to remove water vapor from air to output a stream of dried air (41dry) for feeding as a heating medium to a vaporizer (7) configured to vaporize a cryogenic liquid.

10. The apparatus of claim 9, wherein the drying system (50) has a refrigerant cooling device (51) positioned to feed a stream of refrigerant at a pre-selected dryer feed temperature to the dryer (41) so that one or more elements of the dryer are coolable to contact the air passed through the dryer and condense water vapor within that air to remove water vapor from the air to form the stream of dried air (41dry).

11. The apparatus of claim 10, comprising a recirculation device (53) positioned to increase pressure of the refrigerant output from the dryer (41) to a pre-selected refrigerant cooling device feed pressure for feeding to the refrigerant cooling device (51) via a refrigerant cooling device feed conduit (56) connected between the recirculation device and the refrigerant cooling device so that the refrigerant output from the dryer is passable to the refrigerant cooling device to undergo cooling to the pre-selected dryer feed temperature.

12. A process for fog mitigation, comprising:
positioning at least one fog collection device (17) adjacent to a vaporizer (7) configured to vaporize a cryogenic liquid;
collecting fog formed via operation of the vaporizer (7) via the at least one fog collection device (17) for fog mitigation.

13. The process of claim 12, comprising:
collecting liquid water from the at least one fog collection device (17) for use of the liquid water.

14. The process of claim 12 or claim 13, comprising:
drying air to form a stream of dried air (41dry) for feeding to the vaporizer (7) as a heating medium for vaporization of the cryogenic liquid.

15. The process of claim 14, comprising:
feeding a refrigerant to a dryer (41) for the drying of the air to form the stream of dried air (41dry).

16. The process of any one of the claims 12 to 15, wherein the at least one fog collection device (17) comprises at least one of:
a mesh body (40) positionable adjacent the vaporizer (7); and/or
at least one fan (25) positionable adjacent a lower portion of the vaporizer (7) or below the vaporizer (7), a body (31) of the at least one fan (25) configured to rotate to mitigate the fog formation.

17. The process of any one of claims 12 to 16, wherein the at least one fog collection device (17) comprises:
a housing (17g) having at least one sidewall (17h) extending from a bottom (17b) to define a chamber, at least one support (7s) of the vaporizer (7) being positionable in the chamber, an upper portion of the at least one sidewall defining a mouth through which a fog flow of the fog is passable to collect the fog within the chamber;
and at least one of:
a fan (25) positioned adjacent the chamber that is rotatable to help drive the fog flow of the fog into the chamber;
a funnel (18) positioned adjacent the chamber to guide the fog flow into the chamber; and/or
a nozzle apparatus (28) positioned to spray water to form a water curtain within the chamber.
